Europäisches Patentamt

European Patent Office

Office européen des brevets

(11) Publication number: **0 497 442 A2**

# EUROPEAN PATENT APPLICATION

(21) Application number: **92300019.4**

(22) Date of filing: **02.01.92**

(51) Int. Cl.⁵: **G06F  13/38**

(30) Priority: **29.01.91 US 647606**

(43) Date of publication of application:
**05.08.92 Bulletin  92/32**

(84) Designated Contracting States:
**AT BE CH DE DK ES FR GB GR IT LI LU NL PT SE**

(71) Applicant: **ADVANCED MICRO DEVICES, INC.**
**901 Thompson Place P.O. Box 3453**
**Sunnyvale, CA 94088(US)**

(72) Inventor: **Ritz, Terry G.**
**575 E. Torrey 1122**
**New Branfels, Texas 78130(US)**

(74) Representative: **Sanders, Peter Colin**
**Christopher et al**
**BROOKES & MARTIN High Holborn House**
**52/54 High Holborn**
**London WC1V 6SE(GB)**

(54) **Multi-peripheral controller.**

(57) A peripheral controller interfaces a central processing unit with a plurality of peripheral external devices. The peripheral controller includes first and second serial port interfaces, a parallel port interface, a floppy disk controller interface, a hard disk drive interface, a microcontroller and a programmable input/output port interface. The interfaces and the microcontroller are all integrated together within a common integrated circuit.

The present invention generally relates to a peripheral controller for interfacing a plurality of peripheral devices to a central processing unit. The present invention more particularly relates to such a peripheral controller which includes at least a pair of serial port interfaces, a parallel port interface, a hard disk drive interface, and a keyboard microcontroller which are all integrated within the same integrated circuit.

There are many applications wherein a central processing unit is to be interfaced with a peripheral device. Once such application is in personal computers wherein the central processing unit of the personal computer is to be interfaced with a peripheral device such as a keyboard, or a hard disk drive, for example. In such applications, it is not unusual for a personal computer manufacturer to provide the interface between the central processing unit of the personal computer and a peripheral device with a separate interface integrated circuit contained on individual add-in card. When multiple peripheral devices are to be interfaced, such add-in cards represent a high component count for such systems, a final large package size, and a high cost of manufacture.

There is therefore a need in the art for a peripheral controller which fully integrates these heretofore separate interface functions onto a single integrated circuit component. Such an integrated circuit component would not only provide the personal computer designer with flexibility, but in addition, would result in a personal computer which is of smaller physical size and less costly to manufacture.

Accordingly, there is described herein a peripheral controller adapted for interfacing a central processing unit with a plurality of peripheral external devices. The peripheral controller includes a multiple-bit data bus adapted to be coupled to the central processing unit, a multiple-bit address bus adapted to be coupled to the central processing unit, and first and second serial port interfaces coupled to the data bus. The peripheral controller further includes a parallel port interface coupled to the data bus, a hard disk drive interface coupled to the data bus, and a microcontroller coupled to the data bus and the address bus. The peripheral controller further includes control means having a first input coupled to the address bus, a second input adapted to be coupled to the central processing unit, and a plurality of outputs, each output being coupled to a respective given one of the interfaces and the microcontroller for decoding addresses received over the address bus and enabling the interfaces and microcontroller responsive to the addresses. The interfaces, the microcontroller, the buses, and the control means are all integrated together within a common integrated circuit.

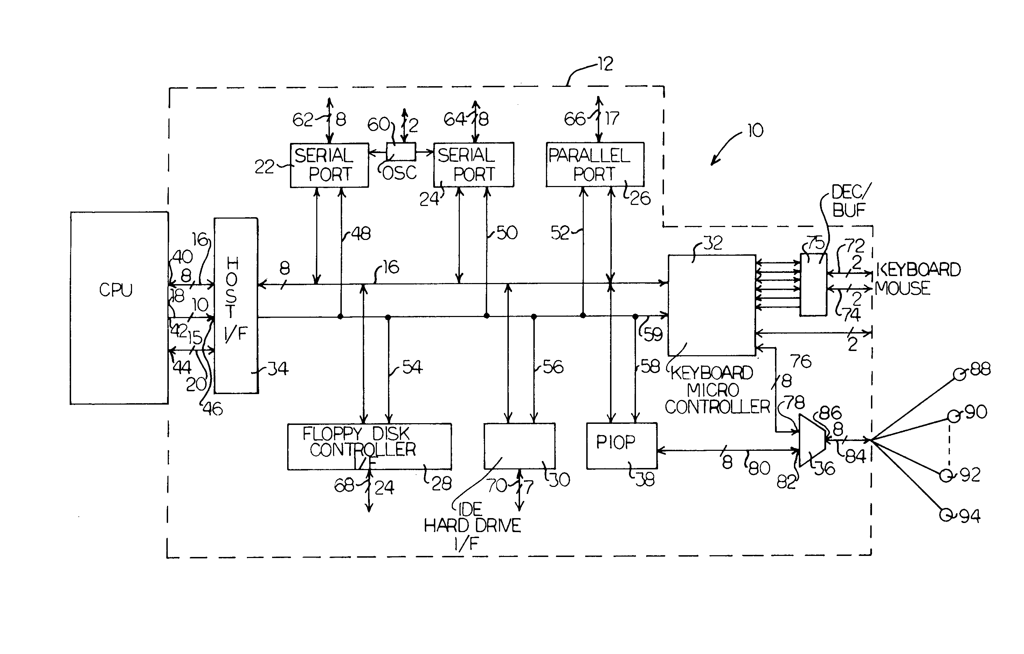

In the accompanying drawing, by way of example only, the sole figure is a schematic block diagram of a peripheral controller embodying the present invention.

Referring now to the sole figure, it illustrates a peripheral controller 10 embodying the present invention arranged for interfacing a central processing unit 14 to a plurality of peripheral devices. The peripheral controller 10 is implemented within a single integrated circuit 12 for interfacing the central processing unit 14 to the aforementioned external devices (not shown).

The peripheral controller 10 generally includes a multiple-bit data bus 16, a multiple-bit address bus 18, a control bus 20, first and second serial port interfaces 22 and 24, a parallel port interface 26, a floppy disk controller interface 28, a hard disk drive interface 30, a keyboard microcontroller 32 and a programmable input/output port interface 38. The peripheral controller 10 further includes a control means or host 34 and a multiplexer 36.

The data bus 16 is a bi-directional, 8-bit parallel bus which couples the control means 34 to a data input/output 40 of the central processing unit 14. The address bus 18 is a 10-bit parallel bus which couples the control means 34 to an address output 42 of the central processing unit 14. The control bus 20 is a 15-bit parallel bus which couples the control means 34 to a control input/output 44 of the central processing unit 14.

The data bus 16 conveys data from the central processing unit to the interfaces 22, 24, 26, 28, 30 and 38, and the microcontroller 32 through the host 34. The data bus 16 also conveys data from the interfaces and the microcontroller back to the central processing unit 14 through the host 34.

The address bus 18 is coupled to the control means 34 to provide the control means 34 with addresses from the central processing unit 14. Each of the interfaces and the microcontroller has its own unique address. The control means or host 34, decodes the addresses which it receives at a multiple-bit input 46 to enable the addressed interfaces and microcontroller over control lines 48, 50, 52, 54, 56, 58 and 59. As will be appreciated by those skilled in the art, each of the interfaces and the microcontroller include at least one register which must be accessed by the central processing unit 14. The address bus for this purpose is not illustrated so as to not unduly complicate the figure.

The control bus 20 conveys from the central processing unit to the control means or host 34 various control signals utilized by the control means 34 in enabling the interfaces. These control signals, as well known in the art, include read and write strobes, address enable, reset and direct memory access signals. Additionally, the control bus 20 conveys to the central processing unit from the control means or host 34 various control signals for indicating status to the central processing unit. These control signals, as well known in the art, include interrupt and direct memory access signals.

The first and second serial port interfaces 22 and 24 preferably take the form of IBM PC/AT compatible universal asynchronous receiver/transmitters (UARTs) with each preferably being a 16450 equivalent UART of the type well known in the art. The interfaces 22 and 24 each serves as a serial data input/output interface to provide standard RS-232C BAUD rates when using any one of the standard BAUD rate crystal frequencies of 1.8432 MHz, 2.4576 MHz, or 3.072 MHz. Each interface performs serial-to-parallel conversion on data characters received from peripheral devices or modems and parallel-to-serial conversion on data characters received from the central processing unit. As is well known in the art, the complete status of each interface can be read over the data bus 16 at any time by the central processing unit. The interfaces 22 and 24 are adapted to be coupled to their respective peripheral devices by 8-bit bi-directional buses 62 and 64 respectively.

The peripheral controller 10 further includes an oscillator 60 which is coupled to the first and second interfaces 22 and 24. The oscillator 60 provides the interfaces 22 and 24 with clocking pulses in a manner well known in the art and is, in accordance with the preferred embodiment, integrated within the integrated circuit 12.

The parallel port interface 26 is preferably an IBM PC/AT compatible parallel port of the type well known in the art. It allows the connection of various devices which transfer 8-bit parallel data to and from the central processing unit 14 over the data bus 16. The parallel port interface 26 is adapted to be coupled to such a peripheral device over a multiple-bit parallel bus 66.

The floppy disk controller interface 28 is also preferably an IBM PC/AT compatible interface such as a 765A/B compatible controller. The floppy disk controller interface 28 is adapted to be coupled to a floppy disk drive by a multiple-bit parallel bus 68. As well known in the art, such interfaces transfer serial data to the floppy disk drive over one of the channels of the bus 68 and receives serial data from the floppy disk drive over another channel of the serial bus 68. The other channels of the bus 68 are used for conveying control information of the type well known in the art.

The hard disk drive interface 30 preferably is an integrated drive electronics (IDE) hard drive interface which is also IBM PC/AT compatible. As well known in the art, such interfaces support up to two disk drives. The interface 30 is adapted to be coupled to a hard disk drive over a multiple-bit bus 70 which provide the following signals well known in the art: D7; CSO#; CS1#; IOCS16# or DACK3#; DIR; UEDN#; and LDEN#. The foregoing signals may be utilized to interface the peripheral controller 10 to a hard disk drive with a PC/AT bus interface. As well known in the art, the CS0# and CS1# signals form 2-chip selects to access the task file registers of the hard drives.

The keyboard microcontroller 32 preferably is an 8042 equivalent keyboard microcontroller of the type well known in the art and is also IBM PC/AT compatible. Such microcontrollers are well known in the art. The microcontroller 32 is adapted to be coupled to an external keyboard by a 2-bit bus 72 and/or a mouse by 2-bit bus 74 through an IBM PC/AT and ST/2 compatible decoder/buffer 75.

Associated with the multiplexer 36 is a first bi-directional multiple-bit bus 76 coupling the microcontroller 32 to a first multiple-bit input 78 of multiplexer 36 and a second bi-directional multiple-bit bus 80 coupling the programmable input/output port interface 38 to a second multiple-bit input 82 of the multiplexer 36. Also associated with the multiplexer 36 is a third bi-directional multiple-bit bus 84 which couples the multiple-bit output 86 of the multiplexer 36 to the external terminals 88, 90, 92, and 94 of the integrated circuit 12. Only four such terminals are illustrated in the drawing but it is to be understood that in practicing the present invention, eight such terminals would be provided with each terminal being coupled to a respective given one of the conductors of the multiple-bit bus 84.

The multiplexer 36 is arranged to selectively couple either the first multiple-bit bus 76 or the second multiple-bit bus 80 to the third multiple-bit bus 84. As a result, the multiplexer 36 allows the plurality of external terminals to be used as general input/output pins for either the microcontroller 32 or the programmable input/output port interface 38.

With the multiplexer 36, the programmable input/output port interface provides the capability to reconfigure up to eight of the microcontroller input/output pins for generating chip selects for external logic or for use as an alternative to the input/output pins provided on the microcontroller. Preferably, the multiplexer 36 is selectively controlled by an input/output port configuration register within the microcontroller 32. Also, preferably, the programmable input/output port interface consists of eight pins individually programmable as an input, output latch, or output decode pins.

While a particular embodiment of the present invention has been shown and described, modifications may be made, and it is therefore intended to cover in the appended claims all such changes and modifications which fall within the true spirit and scope of the invention.

## Claims

1. A peripheral controller adapted for interfacing a central processing unit with a plurality of peripheral external devices, said peripheral controller comprising:

a multiple-bit data bus adapted to be coupled to said central processing unit;

a multiple-bit address bus adapted to be coupled to said central processing unit;

first and second serial port interfaces coupled to said data bus;

a parallel port interface coupled to said data bus;

a hard disk drive interface coupled to said data bus;

a microcontroller coupled to said data bus; and

control means having a first input coupled to said address bus, a second input adapted to be coupled to said central processing unit, and a plurality of outputs, each output being coupled to a respective given one of said interfaces and said microcontroller for decoding addresses received over said address bus and enabling said interfaces and said microcontroller responsive to said addresses,

said interfaces, said microcontroller, said buses, and said control means being integrated together within a common integrated circuit.

2. A peripheral controller as defined in Claim 1 further including a programmable input/output port interface coupled to said data bus and to one of said control means outputs, said programmable input/output port interface also being integrated within said common integrated circuit.

3. A peripheral controller as defined in Claim 2 further comprising a multiplexer having a first multiple-bit input, a second multiple-bit input, and a multiple-bit output, a first multiple-bit bus coupling said multiplexer first multiple-bit input to said microcontroller, a second multiple-bit bus coupling said multiplexer second multiple-bit input to said programmable input/output port interface, and a third multiple-bit bus coupled to said multiplexer multiple-bit output, said multiplexer being arranged to selectively couple said first multiple-bit bus or said second multiple-bit bus to said third multiple-bit bus.

4. A peripheral controller as defined in Claim 3 wherein said common integrated circuit includes a plurality of external terminals coupled to said third multiple-bit bus.

5. A peripheral controller as defined in Claim 1 further including an oscillator coupled to said first and second serial port interfaces for providing said serial port interfaces with clock pulses, said oscillator also being integrated within said common integrated circuit.

6. A peripheral controller as defined in Claim 1 wherein said data bus is an eight-bit bus.

7. A peripheral controller as defined in Claim 1 wherein said address bus is a ten-bit bus.

8. A peripheral controller as defined in Claim 1 further including a multiple-bit control bus for coupling said control means second input to said central processing unit.

9. A peripheral controller as defined in Claim 8 wherein said control bus is a fifteen-bit bus.

10. A peripheral controller as defined in Claim 1 further including a floppy disk controller interface coupled to said data bus and to one of said control means outputs, said floppy disk controller interface also being integrated within said common integrated circuit.

11. A peripheral controller as defined in Claim 1 wherein said microcontroller is a keyboard microcontroller.